# EUROPÄISCHE PATENTSCHRIFT

(11) **EP 1 259 719 B1**
(45) Veröffentlichungstag und Bekanntmachung des Hinweises auf die Patenterteilung: **07.10.2009**
(21) Anmeldenummer: 01909540.5
(22) Anmeldetag: 30.01.2001
(51) Int. Cl.: F02D 41/22, F02D 41/14

(54) **VERFAHREN UND EINRICHTUNG ZUR STEUERUNG EINER MEHRZYLINDRIGEN BRENNKRAFTMASCHINE**
METHOD AND DEVICE FOR CONTROLLING A MULTICYLINDER INTERNAL COMBUSTION ENGINE
PROCEDE ET DISPOSITIF POUR COMMANDER UN MOTEUR A COMBUSTION INTERNE MULTICYLINDRE

(30) Priorität: 25.02.2000 DE 10009065
(43) Veröffentlichungstag der Anmeldung: 27.11.2002
(73) Patentinhaber: ROBERT BOSCH GMBH, 70442 Stuttgart (DE)
(72) Erfinder: UHL, Stephan, 88045 Friedrichshafen (DE)
(86) Internationale Anmeldenummer: PCT/DE2001/000344
(87) Internationale Veröffentlichungsnummer: WO 2001/063111

(56) Entgegenhaltungen:
- EP-A- 0 140 065
- EP-A- 0 781 912
- DE-A- 19 828 279
- PATENT ABSTRACTS OF JAPAN vol. 010, no. 176 (M-491), 20. Juni 1986 (1986-06-20) & JP 61 025947 A (NIPPON DENSO CO LTD), 5. Februar 1986 (1986-02-05)

## Beschreibung

Die Erfindung betrifft ein Verfahren zur Steuerung einer mehrzylindrigen Brennkraftmaschine gemäß dem Oberbegriff des unabhängigen Anspruchs.

### Stand der Technik

Bei gattungsgemäßen Steuereinrichtungen bzw. Verfahren zur Steuerung mehrzylindriger Brennkraftmaschinen, wie z.B. aus EP0781912, ist eine Zylindergleichstellungsregelung zur Angleichung bzw. Gleichstellung zylinderindividueller Drehmomentbeiträge zum Gesamtdrehmoment der Brennkraftmaschine vorgesehen. Bei der Brennkraftmaschine kann es sich beispielsweise um einen Otto-Motor oder einen Dieselmotor handeln. Ein besonderer Bedarf für eine Zylindergleichstellungsfunktion besteht beim direkt einspritzenden Otto-Motor. Hier kann verursacht durch eine geringe Toleranzverträglichkeit des Brennverfahrens im Schichtbetrieb und/oder durch Toleranzen der verwendeten Hochdruck-Einspritzventile bzw. in der Verteilung des Kraftstoffes auf die einzelnen Zylinder eine erhöhte Laufunruhe eintreten. Auch alterungsbedingte Änderungen der Durchflußcharakteristik der Hochdruckeinspritzventile können eine Rolle spielen. Eine Zylindergleichstellungsregelung kann eine Verbesserung der Laufruhe bewirken.

Vorzugsweise erfolgt im Rahmen der Zylindergleichstellung eine Erfassung des jeweiligen aktuellen Drehmomentbeitrages (Ist-Moment) eines Zylinders relativ zu seinem Zündungsvorgänger, d.h. keine Absolutmomentenbestimmung, über eine Auswertung des zeitlichen Verlaufs der Kurbel- oder Nockenwellendrehung. Eine Momentenkorrektur mit dem Ziel der Gleichstellung zylinderindividueller Drehmomentbeiträge kann über einen Eingriff auf wenigstens einen verbrennungsbestimmenden Parameter erfolgen, insbesondere über die eingespritzte Kraftstoffmenge, den Zündzeitpunkt beim Otto-Motor, die Abgasrückführrate oder die Einspritzlage. Der Begriff Einspritzlage bezieht sich hier auf die winkelmäßige Lage eines Einspritzimpulses zu einem Bezugspunkt, beispielsweise dem oberen Totpunkt des Kolbens eines Zylinders in seinem Verbrennungstakt.

In der Praxis haben sich besonders solche Zylindergleichstellungsregelungen bewährt, bei denen zur Auswertung des zeitlichen Verlaufs der Drehbewegung der Kurbel- oder Nockenwelle sogenannte Segmentzeiten erfaßt werden. Segmentzeiten sind die Zeiten, in denen die Kurbel- oder Nockenwelle einen vorbestimmten Winkelbereich überstreicht, der einem bestimmten Zylinder zugeordnet ist. Je gleichmäßiger der Motor läuft, desto geringer fallen die Unterschiede zwischen den Segmentzeiten der einzelnen Zylinder aus. Aus den genannten Segmentzeiten läßt sich daher ein Maß für die Laufunruhe des Motors bilden. Bei den bekannten Verfahren ist jedem Zylinder der Brennkraftmaschine eine individuelle Regelung zugeordnet, der als Eingangssignal ein zylinderindividueller Laufunruhe-Istwert zugeführt wird. Auf Grundlage der Laufunruhe-Istwerte wird ein Regelsollwert ermittelt. Beispielsweise können die Laufunruhewerte mehrerer Zylinder zur Bildung eines Regelsollwertes gemittelt werden. Ausgangsseitig beeinflussen die Regelungen die zylinderspezifische Einspritzzeiten und damit die zylinderindividuellen Drehmomentbeiträge so, daß sich die zylinderindividuellen Laufunruhe-Istwerte dem Sollwert annähern. Bewährte Zylindergleichstellungsregelungen sind beispielsweise in der EP 140 065 oder der DE 198 28 279 offenbart. Bezüglich der Laufunruhewertbildung soll die Offenbarung der letztgenannten Offenlegungsschrift ausdrücklich in diese Anmeldung einbezogen sein.

Die Erfindung bezweckt Verbesserungen im Bereich der Zylindergleichstellungsregelung.

### Vorteile der Erfindung

Erfindungsgemäß werden Verbesserungen im Bereich der Zylindergleichstellungsregelung dadurch erreicht, daß eine Wirkungsüberwachung für die Zylindergleichstellungsregelung vorgesehen wird und daß bei Störungen im Bereich der Zylindergleichstellungsregelung mindestens ein das Vorliegen einer Störung anzeigendes Fehlersignal erzeugt wird. Dadurch wird es möglich zu erkennen, ob eine Zylindergleichstellungsregelung die ihr zugedachte Funktion auch tatsächlich in beabsichtigter Weise ausübt.

Beispielsweise können konventionelle Zylindergleichstellungsregelungen bei direkt einspritzenden Otto-Motoren nicht gewährleisten, daß eine Reglereingriffsmaßnahme, beispielsweise ein Anfetten des Verbrennungsgemisches durch überproportionale Kraftstoffzumessung, auch tatsächlich die gewünschte Wirkung erzielt, d.h. zur gewünschten Steigerung des Drehmomentbeitrages führt. Durch die erfindungsgemäße Wirkungsüberwachung kann dies erkannt und es können, ausgelöst durch das mindestens eine Fehlersignal, geeignete Abhilfemaßnahmen eingeleitet werden. Die Wirkungsüberwachung kann sich quasi als Umhüllende um eine Zylindergleichstellungsregelung legen und deren ordnungsgemäße Funktion überwachen. Dadurch können Reglerstabilität und Reglerwirkung bei der Zylindergleichstellung gewährleistet werden.

Bei einer vorteilhaften Weiterbildung ist vorgesehen, daß bei der Zylindergleichstellungsregelung für jeden Zylinder der Brennkraftmaschine innerhalb eines definierten Arbeitsbereiches eine individuelle Regelung mindestens einer verbrennungsbeeinflussenden Betriebsgröße durchgeführt wird. Bei dieser handelt es sich vorzugsweise um die Kraftstoffzumessung, d.h. die Menge des einzuspritzenden Kraftstoffes, der insbesondere beim Schichtbetrieb von Otto-Motoren praktisch ausschließlich das zylinderindividuelle Drehmoment bestimmt. Es ist vorgesehen, daß eine Erzeugung eines Fehlersignals erfolgt, wenn mindestens eine zylinderindividuelle Regelung einen Rand bzw. eine Grenze des definierten Arbeitsbereiches erreicht. Es wird also das Verlassen des Arbeitsbereiches bzw. der Arbeitsbreite der Regelung als Indiz für ein möglicherweise vorliegendes Problem genutzt. Hierbei wird davon ausgegangen, daß es die bestimmungsgemäße Aufgabe einer Zylindergleichstellungsregelung ist, im Normalbetrieb der Brennkraftmaschine unvermeidbar auftretende Drehmomentunterschiede zwischen den einzelnen Zylindern auszuregeln. Diese Drehmomentunterschiede können, wie erwähnt, z.B. durch toleranzbedingte Unterschiede der Durchflußcharakteristika der einzelnen Hochdruckeinspritzventile verursacht sein. Hier sind derzeit typische Toleranzen im Bereich von 20 % bis 25 % um ein Einspritz-Mittelwert nicht selten. Entsprechend groß sind auch die aufgrund streuender Hochdruckeinspritzventile zu erwartenden Momentenfehler. Dies wird bei der ursprünglichen Applikation einer Brennkraftmaschine durch entsprechende Auslegung der Arbeitsbreite der Regelung berücksichtigt. Dabei kann beispielsweise für jeden Regler ein Eingriffsanschlag festgelegt werden, der mindestens doppelt so groß appliziert wird wie der erwartete maximale Momentenfehler. Dadurch erhält die Regelung eine gewisse Sicherheitsreserve oder Robustheit, und es ist ein normaler Reglerbetrieb gewährleistet. Der Arbeitsbereich der Regelung wird also derart großzügig bemessen, daß übliche Toleranzen innerhalb des Arbeitsbereiches liegen und ein gewisser Sicherheitsabstand zu den Grenzen des Arbeitsbereiches verbleibt. Wird nun bei mindestens einer Regelung eine Arbeitsbereichgrenze erreicht (d.h. ein Regler läuft an seinen voreingestellten Eingriffsanschlag), so kann offenbar das Ziel der Zylindergleichstellungsregelung, nämlich die Eliminierung von Winkelbeschleunigungsbeiträgen der einzelnen Zylinder, mit dem zur Verfügung stehenden, begrenzten Eingriff der Regelung nicht mehr erzielt werden. Dies führt zur Erzeugung eines Fehlersignals.

Bei einer Weiterbildung ist vorgesehen, daß als Antwort auf ein Fehlersignal zunächst eine definierte Veränderung der Regelungscharakteristik der Regelung erfolgt. Insbesondere wird eine geeignet vordefinierte Rücknahme der Regelkreisverstärkung durchgeführt. Die gemäß der Weiterbildung vorgesehene, vorzugsweise automatische und während des Betriebes der Brennkraftmaschine durch Änderung der Reglerparametrisierung vornehmbare Neudefinition des Regler-Arbeitsverhaltens berücksichtigt in vorteilhafter Weise die Erkenntnis, daß die Ursachen für einen Regleranschlag in unterschiedlichen Bereichen liegen können. Einerseits können Fehler im Bereich der Regelung selbst auftreten (hier als Regler-Defekt bezeichnet), andererseits im Bereich der zu regelnden Funktion (hier als Zylinder-Defekt bezeichnet). Diese Fehlertypen können alternativ oder kumulativ auftreten. Ein Regler-Defekt kann in der Regel als "das kleinere Übel" angesehen werden.

Beispielsweise kann sich eine Instabilität der Regelung infolge unvorhersehbarer Parameteränderungen innerhalb der Regelstrecke ergeben haben, die ursächlich für das Erreichen des Regelanschlages ist. So können sich beispielsweise Veränderungen in den Reibmomenten des Motors ergeben haben. Sollte für den erfolgten Regleranschlag im wesentlichen nur eine beispielsweise alterungsbedingte Streckenparameteränderung im Bereich der Regelung ursächlich sein, so läßt sich diese Ursache durch die Neudefinition des Arbeitsverhaltens, insbesondere der Reglerkreisverstärkung, berücksichtigen, durch die die Robustheit der Regelung vergrößert wird. Nach dieser Anpassung werden dann in der Regel Schwankungen wieder innerhalb des Regelungs-Arbeitsbereiches mit der neu definierten Reglerkreisverstärkung liegen und die Regelung arbeitet wieder störungsfrei.

Eine bevorzugte Weiterbildung sieht vor, daß die beschriebene Adaption der Reglercharakteristik, insbesondere durch Rücknahme der Reglerkreisverstärkung, noch mindestens ein weiteres Mal durchgeführt wird, wenn nach erstmaliger Änderung ein erneuter Regleranschlag auftritt und damit ein Fehlersignal erzeugt wird. Es wird also nach einer ersten Veränderung der Reglercharakteristik als Antwort auf ein erneutes Fehlersignal mindestens ein weiteres Mal eine Veränderung der Reglercharakteristik durchgeführt, insbesondere durch weitere Rücknahme der Reglerverstärkung. Beispielsweise kann diese in einem ersten Schritt auf die Hälfte, in einem nächsten Schritt dann auf ein Drittel, danach auf ein Viertel usw. der ursprünglich eingestellten Reglerkreisverstärkung zurückgesetzt werden. Durch die sukzessive Reduktion der Reglerkreisverstärkung bis zu einem vorgebbaren Endwert wird die Regelung, die üblicherweise mit einzelnen PI-Reglern arbeitet, robuster, aber auch dynamisch langsamer, was in Kauf genommen wird.

Als Ursache für einen Regleranschlag kommen auch tatsächliche Zylinderdefekte in Betracht. Hierunter sind im Sinne dieser Anmeldung insbesondere mechanische Defekte an der Einspritzung und/oder der Zündung eines Zylinders zu verstehen. Beispielsweise kann es so sein, daß das von einem Zylinder erwartete Drehmoment auch durch ein (begrenztes) Anfetten, d.h. eine stärkere Kraftstoffzumessung, nicht mehr erreicht werden kann, weil beispielsweise aufgrund größerer Veränderungen bei Ventildurchfluß und/oder Ventilstrahl das Gemisch nicht mehr in ausreichender Weise in den Zylinder eingebracht oder richtig entflammt werden kann. Insbesondere für derartige Fälle kann vorgesehen sein, daß als Antwort auf ein Fehlersignal, vorzugsweise nach mindestens einmaliger Änderung der Reglercharakteristik, eine Abschaltung der Regelung durch die Wirkungsüberwachung erfolgt. Zweckmäßig wird dabei eine Rücksetzung der Regelungscharakteristika auf den ursprünglich definierten Arbeitsbereich erfolgen. Die Regelung wird also durch die Wirkungsgradüberwachung außer Betrieb und in ihren Ursprungszustand zurückversetzt. Nach einer Heilung des zugrunde liegenden Defektes kann die Regelungsfunktion dann sofort in ihrer ursprünglichen Wirksamkeit eingreifen.

Um zeitnah zum Auftreten von Defekten geeignete Heilungsmöglichkeiten zu gestatten, ist vorzugsweise vorgesehen, daß als Antwort auf ein Fehlersignal, vorzugsweise nach mindestens einmaliger Veränderung der Regelercharakteristik, ein externes Warnsignal abgegeben wird. Dieses kann beispielsweise eine vom Bediener direkt wahrnehmbare, vorzugsweise optische Warnanzeige aktivieren und/oder einen entsprechenden Eintrag in einen Speicher eines Diagnosesystems erzeugen, so daß bei einer nachfolgenden Diagnose der aufgetretene und ggf. genau definierte Defekt behoben werden kann.

Es ist auch möglich, daß als Antwort auf ein Fehlersignal, vorzugsweise nach mindestens einmaliger Veränderung der Regelungscharakteristik, ein Anhalten der Regelung durch die Wirkungsüberwachung unter Beibehaltung der aktuellen Reglercharakteristik erfolgt. Auch hier wird vorzugsweise über die Abgabe eines entsprechenden externen Warnsignals ein Hinweis auf das Vorliegen eines Defektes und damit eine Aufforderung zur Heilung des Defektes gegeben.

Die Erfindung ermöglicht also insbesondere eine mehrstufige, d.h. gestaffelte Reaktion auf Probleme bei der Zylindergleichstellungsregelung. In einem ggf. mehrfach wiederholbaren ersten Schritt wird die Regelungscharakteristik durch geeignete automatische und während des Betriebes der Brennkraftmaschine durchführbare neue Reglerbedatung so verändert, daß vor allem alterungsbedingte Veränderungen in der Regelstrecke berücksichtigt werden. Erst wenn nach dieser Adaption der Reglercharakteristik weiterhin durch die Wirkungsüberwachung Fehler angezeigt werden, wird von tatsächlichen Defekten im Zylinderbereich ausgegangen, die ggf. einen Reparatureingriff erfordern. Der erste Schritt kann vom Bediener unbemerkt ablaufen, während der zweite Schritt zweckmäßig Warnsignale erzeugt, die auf eine erforderliche Wartung oder Reparatur hinweisen.

### Zeichnung

Diese und weitere Merkmale gehen außer aus den Ansprüchen auch aus der Beschreibung und der Zeichnung hervor. Die einzige Zeichnungsfigur zeigt ein experimentell ermitteltes Meßdiagramm zur Erläuterung des Verhaltens der Wirkungsüberwachung einer Zylindergleichstellungsregelung.

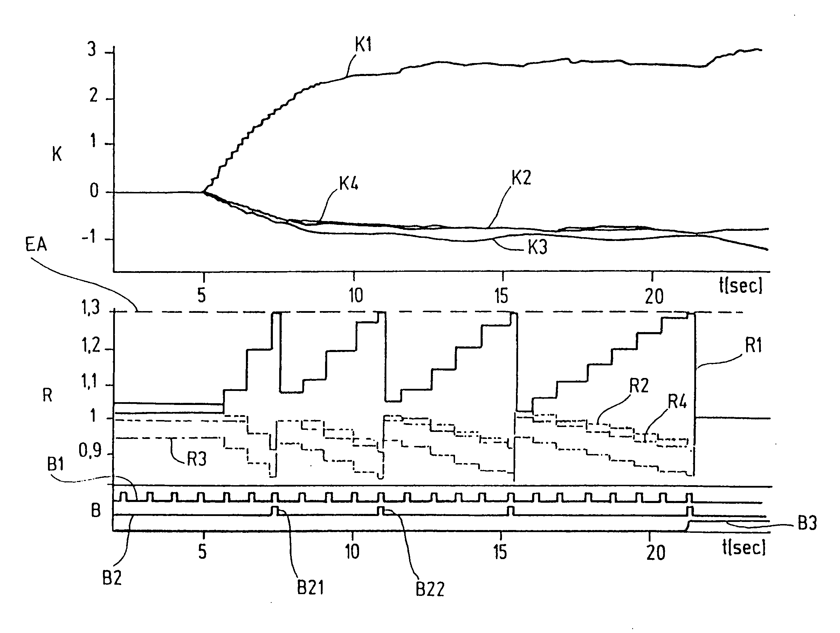

In Fig. 1 sind zur Erläuterung des zeitlichen Verhaltens einer bevorzugten Ausführungsform einer Wirkungsüberwachung für eine Zylindergleichstellungsregelung bei einem mit vier Zylindern ausgestatteten Benzin-Direkteinspritzermotor drei Diagramme über einer gemeinsamen Zeitachse (X-Achse) aufgetragen. Die zugeordneten Werte der Y-Achsen wurden experimentell ermittelt, wobei die Brennkraftmaschine mit ca. 1.400 U/min im Schichtbetrieb (15 %) betrieben wurde.

Die vier Kurven K1, K2, K3, K4 im oberen Diagramm geben als Y-Werte zylinderindividuelle Winkelbeschleunigungswerte K der Kurbelwelle der Brennkraftmaschine an. Der einer höchsten Laufruhe entsprechende Sollwert (Regelungssollwert der Zylindergleichstellungsregelung) liegt bei der gewählten Definition beim Wert K1 = K2 = K3 = K4 = 0. Diese Idealwerte sind in den ersten fünf Sekunden des Auftragungszeitraumes annähernd durch die Zylindergleichstellungsregelung eingestellt. Ein von Null abweichender Wert für mindestens einen der Winkelbeschleunigungswerte K1 bis K4 bedeutet, daß ein Regeleingriff der Zylindergleichstellungsregelung erforderlich ist.

In dem mittleren Diagramm sind auf der Y-Achse Regeleingriffsfaktoren R für die den vier Zylindern zugeordneten vier PI-Regler der Zylindergleichstellungsregelung aufgetragen. Die einen Reglereingriff repräsentierenden Ordinatenwerte R sind als Faktoren auf die Einspritzzeit am jeweiligen Zylinder zu verstehen. So bedeutet beispielsweise ein Wert von R1 = 1,2, daß am Zylinder 1 die Einspritzzeit durch die Regelung um 20 % gegenüber einer Bezugseinspritzzeit vergrößert wird, was idealerweise einer Vergrößerung der eingespritzten Kraftstoffmenge um 20 % entspricht. Damit entsprechen Werte von R > 1 einem Anfetten des Gemisches über die durchschnittliche Gemischzusammensetzung hinaus, während Werte von R < 1 eine Abmagerung bedeuten. Die Gesamtregelung ist bevorzugt so eingestellt, daß die Gesamteinspritzmenge pro Zeiteinheit im wesentlichen gleich bleibt.

Wie eingangs erwähnt, sind typische Toleranzen im Bereich von 20 % bis 25 % um einen Einspritz-Mittelwert nicht selten. Diese Streuung kann insbesondere durch toleranzbedingte Unterschiede der Durchflußcharakteristika der einzelnen Hochdruckeinspritzventile verursacht sein. Damit Schwankungen in diesem Bereich von der Wirkungsüberwachung nicht schon als Hinweis auf das Vorliegen eines darüber hinausgehenden Defektes im Zylinderbereich und/oder in der Regelung interpretiert werden, ist im gezeigten Beispiel die Arbeitsbreite der Regelungen durch entsprechende Reglerbedatung so eingestellt, daß die Regelungen ihren Regleranschlag bei 30 % Abweichung vom Eingriffsfaktor 1 erreichen (R-Wert = 1.3). Zwischen der erwarteten Maximaltoleranz von beispielsweise 25 % und diesem Eingriffsanschlag EA liegt also noch eine gewisse Sicherheitsreserve oder Robustheit, die einen normalen Reglerbetrieb trotz ggf. vorhandener toleranzbedingter Abweichungen der einzelnen Einspritzungen untereinander gewährleistet.

Die drei rechteckkurvenartigen Linien im unteren Diagramm repräsentieren Steuerbits B der digitalen Motorsteuerung, die auch die Regler umfaßt. Die obere Kurve B1 repräsentiert dabei die Reglertaktung und die in im wesentlichen regelmäßigen Abständen auftretenden Rechteckimpulse von etwa 200 Millisekunden Länge die entsprechenden Reglertaktbits, die eine taktweise Aktualisierung der Regler veranlassen.

Die mittlere Kurve B2 repräsentiert die Fehleranzeige der Wirkungsgradüberwachung. Ein entsprechendes Fehlerbit, wie es beispielsweise zum Zeitpunkt t = 7,2 Sekunden auftritt, entspricht also einem Fehlersignal der Wirkungsüberwachung und tritt unter gewissen Bedingungen auf, die eingangs schon beschrieben und weiter unten noch näher erläutert werden.

Die überwiegend mit der Abszisse zusammenfallende untere Linie B3 repräsentiert eine Abschaltfunktion für die Regelung durch die Wirkungsüberwachung und ist derart definiert, daß die Regelung bei nicht gesetztem Bit (Linie auf Abszisse) eingeschaltet und bei gesetztem Bit ausgeschaltet ist. Entsprechend findet in der gezeigten Darstellung nach ca. 21, 2 Sekunden eine Abschaltung der Regelung statt.

Im folgenden wird das Verhalten der Wirkungsüberwachung anhand dieser. Diagramme näher erläutert. Im oberen Diagramm, das den Ist-Zustand des Motors bzgl. seiner Laufruhe repräsentiert, ist die Laufruhe bis zum Zeitpunkt t = 5 Sekunden optimal, da alle zylinderindividuellen Winkelbeschleunigungswerte nahe am Regelsollwert K = 0 liegen. Zum Zeitpunkt t = 5 Sekunden tritt eine Störung dadurch auf, daß am Einspritzventil des ersten Zylinders 50 % weniger Kraftstoff abgegeben wird. Dies hat zur Folge, daß der Drehmomentbeitrag dieses Zylinders bzw. dessen Winkelbeschleunigungswert (Kurve K1) sich vom Sollwert entfernt und innerhalb der nächsten ca. 5 Sekunden auf einen Wert von etwa 2,5 ansteigt. Gleichzeitig weichen die Winkelbeschleunigungswerte der übrigen drei Zylinder (Kurven K2, K3, K4) um im wesentlichen gleiche Beträge allmählich vom Regelsollwert ab. Der Betrag der Abweichung wird unter anderem dadurch bestimmt, daß die Regelung insgesamt derart ausgelegt ist, daß der Gesamtkraftstoffverbrauch aller Zylinder im wesentlichen gleich bleibt.

Im mittleren Diagramm ist die Reaktion der zylinderindividuellen Regler auf den Defekt am Einspritzventil des ersten Zylinders zu erkennen. Anhand von Kurve R1 wird deutlich, daß der dem ersten Zylinder zugeordnete PI-Regler versucht, den durch die Regelung erkannten Fehler (50 % weniger Kraftstoff am Einspritzventil 1) durch Erhöhung der Einspritzzeit zu kompensieren. Diese wird schrittweise im Takt des Reglers (Kurve B1) in Schritten von jeweils 10 % bezogen auf den Ausgangswert erhöht. Zum Zeitpunkt t = 7,2 Sekunden beträgt die Einspritzzeitvergrößerung 30 %, was dem voreingestellten Eingriffsanschlag des Reglers entspricht. Damit ist die Grenze des Regler-Arbeitsbereiches erreicht. Aufgrund der Reglervorgabe, daß die Gesamteinspritzmenge konstant sein soll, werden die Einspritzzeiten bzw. Einspritzmengen der anderen drei Zylinder (R2, R3, R4) entsprechend schrittweise abgesenkt.

Das Erreichen des Eingriffsanschlages EA bei t = 7,2 bewirkt, daß an die Steuerung ein Fehlersignal abgegeben wird, in dem ein erstes Fehlerbit B21 gesetzt wird.

Anhand der vom Wert K = 0 stark abweichenden Kurven K1 bis K4 ist zu erkennen, daß zum Zeitpunkt des Erreichens des Eingriffsanschlages die Laufruhe des Motors nicht wiederhergestellt ist. Das Reglerziel ist also nicht erreicht.

Das Erreichen der Arbeitsbereichsgrenze der Regelung (Eingriffsanschlag EA) führt zu Veränderungen der Reglercharakteristik des dem ersten Zylinder zugeordneten PI-Reglers. Zum einen wird der Regler zurückgesetzt bzw. resetiert, um insbesondere den I-Anteil des Reglers wieder auf Null zu setzen, so daß vorhergegangene Regelabweichungen das Reglerverhalten nach dem Zurücksetzen nicht mehr beeinflussen. Zum anderen erfolgt eine Verkleinerung der Reglerkreisverstärkung, im gezeigten Beispiel auf die Hälfte der zum Zeitpunkt t = 0 vorliegenden, ursprünglichen Reglerkreisverstärkung. Dies bedeutet eine Vergrößerung der Reglerrobustheit bei gleichzeitigem Verlust an Reglerdynamik. Mit anderen Worten, der Regler wird träger und reagiert langsamer auf Regelabweichungen.

Da trotz des Reglereingriffs zwischen Eintritt der Störung (t = 5 Sekunden) und Erreichen des Eingriffsanschlages (t = 7,2 Sekunden) keine Verbesserung der Laufruhe eingetreten ist (Kurve K1 weicht mit steigender Tendenz von Kurven K2 bis K4 ab) versucht die Regelung im Zeitraum nach erstmaligem Erreichen des Eingriffsanschlages bei T = 7,2 Sekunden erneut, den gemeldeten Fehler (weniger Kraftstoff am ersten Einspritzventil) durch Erhöhung der zugeordneten Einspritzzeit schrittweise im Takt des Reglers zu kompensieren. Nach vier Erhöhungsschritten bzw. einem Zeitintervall von ca. 3,5 Sekunden erreicht der Regler erneut bei t = 11 Sekunden seinen vorgestellten Eingriffsanschlag, ohne daß die Laufruhestörung aufgehoben ist. Dies bewirkt die Erzeugung eines zweiten Fehlersignals (Fehlerbit B22) sowie in der bereits beschriebenen Weise ein nochmaliges Zurücksetzen der Regelung (Reset) und eine weitere Verkleinerung der Reglerkreisverstärkung. Diese wird nun beispielsweise auf ein Drittel der ursprünglichen Reglerkreisverstärkung zurückgenommen und dadurch die Reglerrobustheit weiter vergrößert.

Es ist zu erkennen, daß dieser Vorgang (Zurücksetzen des Reglers bei Erreichen des Eingriffsanschlages und weitere Verkleinerung der Reglerkreisverstärkung) im gezeigten Beispiel noch zwei weitere Male durchgeführt wird, wobei jeweils nach Erreichen des Eingriffsanschlages in der darauffolgenden Reglerperiode die Zeit bis zum Erreichen des erneuten Eingriffsanschlages zunimmt und entsprechend mehr Steigerungsschritte der Einspritzzeit durchgeführt werden.

Es ist zu erkennen, daß auch nach dreimaliger Rücknahme der Reglerkreisverstärkung der Regler wieder seinen Eingriffsanschlag (t = 21,2 Sekunden) erreicht. Dies wird bei der gezeigten Ausführungsform der Regelung als Indiz dafür gewertet, daß das Erreichen des Eingriffsanschlages nicht etwa auf Instabilitäten der Regelung (z.B. aufgrund Parameteränderungen der Regelstrecke) zurückzuführen ist, sondern tatsächlich auf einen Zylinderdefekt, der im Beispielsfall eine erhebliche Verminderung der eingespritzten Kraftstoffmenge am ersten Zylinder zur Folge hat. Die Regelung ist so ausgelegt, daß nach dem vierten Erreichen des Eingriffsanschlages (t = 21,2 Sekunden) die Funktion die Regelungsfunktion durch die Wirkungsüberwachung abgeschaltet wird (Setzen des Funktionsausschaltungsbits in Kurve B3). Dabei werden die Eingriffsfaktoren aller Regler auf den Wert 1 zurückgesetzt.

Das letzte, zur Ausschaltung der Wirkungsüberwachung führende Fehlerbit bzw. Fehlersignal und/oder das Abschaltsignal bei t = 21,2 Sekunden in Kurve B3 kann dazu genutzt werden, eine externe Warnanzeige, beispielsweise eine Warnlampe zu aktivieren und/oder einen Eintrag in einem Diagnosespeicher zu erzeugen, um bei einer nächsten Motordiagnose anzuzeigen, daß ein Zylinderdefekt vorliegt, der durch die Zylindergleichstellungsregelung nicht mehr kompensierbar ist. Die Fehlerinformation kann so weit spezifiziert sein, daß entnehmbar ist, daß dieser Fehler im Bereich von Zylinder 1 aufgetreten ist. So können gezielte Abhilfemaßnahmen, beispielsweise durch Austausch des Einspritzventils dieses Zylinders, vorgenommen werden.

## Patentansprüche

1. Verfahren zur Steuerung einer mehrzylindrigen Brennkraftmaschine, bei dem eine Zylindergleichstellungsregelung zur Angleichung zylinderindividueller Drehmomentbeiträge zum Gesamtdrehmoment der Brennkraftmaschine durchgeführt wird, wobei eine Wirkungsüberwachung für die Zylindergleichstellungsregelung durchgeführt wird und bei Störungen im Bereich der Zylindergleichstellungsregelung mindestens ein das Vorliegen einer Störung anzeigendes Fehlersignal erzeugt wird, **dadurch gekennzeichnet, dass** als Antwort auf ein Fehlersignal eine definierte Veränderung der Regelungscharakteristik der Regelung erfolgt.

2. Verfahren nach Anspruch 1, **dadurch gekennzeichnet, dass** die Veränderung der Regelungscharakteristik der Regelung in Form einer Rücknahme der Regelkreisverstärkung erfolgt.

3. Verfahren nach Anspruch 1, **dadurch gekennzeichnet, dass** bei der Zylindergleichstellungsregelung für jeden Zylinder der Brennkraftmaschine innerhalb eines definierten Arbeitsbereiches eine individuelle Regelung mindestens einer verbrennungsbeeinflussenden Betriebsgröße durchgeführt wird und dass eine Erzeugung eines Fehlersignals erfolgt, wenn mindestens eine zylinderindividuelle Regelung eine Grenze des definierten Arbeitsbereiches erreicht.

4. Verfahren nach Anspruch 1 oder 2, **dadurch gekennzeichnet, dass** nach einer ersten Veränderung der Regelungscharakteristik als Antwort auf ein erneutes Fehlersignal mindestens ein weiteres Mal eine Veränderung der Reglercharakteristik durchgeführt wird, insbesondere durch weitere Rücknahme der Regelkreisverstärkung.

5. Verfahren nach einem der vorhergehenden Ansprüche, **dadurch gekennzeichnet, dass** als Antwort auf ein Fehlersignal, vorzugsweise nach mindestens einmaliger Änderung der Regelung durch die Wirkungsüberwachung durchgeführt wird, wobei insbesondere eine Rücksetzung der Regelungscharakteristik auf das ursprünglich definierte Arbeitsverhalten erfolgt, oder dass als Antwort auf ein Fehlersignal, vorzugsweise nach mindestens einmaliger Änderung der Regelungscharakteristik, ein Anhalten der Regelung durch die Wirkungsüberwachung unter Beibehaltung der aktuellen Reglercharakteristik erfolgt.

6. Verfahren nach einem der vorhergehenden Ansprüche, **dadurch gekennzeichnet, dass** als Antwort auf ein Fehlersignal, vorzugsweise nach mindestens einmaliger Veränderung der Regelungscharakteristik, ein externes Warnsignal abgegeben wird, insbesondere zur Aktivierung einer vom Bediener direkt wahrnehmbaren, vorzugsweise optischen Warnanzeige und/oder zur Erzeugung eines Eintrages in einen Speicher eines extern abfragbaren Diagnosesystems.

## Claims

1. Method for controlling a multi-cylinder internal combustion engine, in which method cylinder equalization regulation is carried out in order to equalize cylinder-specific torque contributions to the overall torque of the internal combustion engine, with effect monitoring of the cylinder equalization regulation being carried out, and with at least one error signal, which indicates the presence of a fault, being generated in the event of faults within the cylinder equalization regulation, **characterized in that**, in response to an error signal, a defined change in the regulating characteristic of the regulation takes place.

2. Method according to Claim 1, **characterized in that** the change in the regulating characteristic of the regulation takes place in the form of a reduction of the regulating loop gain.

3. Method according to Claim 1, **characterized in that**, in the cylinder equalization regulation, individual regulation of at least one combustion-influencing operating variable within a defined working range is carried out for each cylinder of the internal combustion engine, and **in that** an error signal is generated if the cylinder-specific regulation of at least one cylinder reaches a limit of the defined working range.

4. Method according to Claim 1 or 2, **characterized in that,** after a first change in the regulating characteristic, in response to a new error signal, a change in the regulator characteristic is carried out at least one more time, in particular by means of a further reduction of the regulating loop gain.

5. Method according to one of the preceding claims, **characterized in that,** in response to an error signal, preferably after a change in the regulator characteristic has been carried out at least once, the regulation is shut down by the effect monitoring, in particular with the regulating characteristic being reset to the originally defined working behaviour, or in that, in response to an error signal, preferably after a change in the regulating characteristic has been carried out at least once, the regulation is halted by the effect monitoring, with the present regulator characteristic being maintained.

6. Method according to one of the preceding claims, **characterized in that,** in response to an error signal, preferably after a change in the regulating characteristic has been carried out at least once, an external warning signal is output, in particular in order to activate a preferably visual warning display which can be directly observed by the operator, and/or in order to generate an entry into a memory of a diagnostic system which can be externally queried.

## Revendications

1. Procédé de commande d'un moteur à combustion interne multicylindres, dans lequel un réglage de l'équipartition du couple des cylindres est effectué pour adapter des contributions de couple individuelles aux cylindres au couple total du moteur à combustion interne, un contrôle de l'action du réglage de l'équipartition du couple des cylindres étant effectué et en cas de perturbations dans la région du réglage de l'équipartition du couple des cylindres, au moins un signal d'erreur indiquant la présence d'une perturbation étant généré, **caractérisé en ce qu'**une variation définie de la caractéristique de réglage a lieu en réponse à un signal d'erreur.

2. Procédé selon la revendication 1, **caractérisé en ce que** la variation de la caractéristique de réglage a lieu sous forme de reprise de l'amplification du circuit de réglage.

3. Procédé selon la revendication 1, **caractérisé en ce que** lors du réglage de l'équipartition du couple des cylindres on effectue pour chaque cylindre du moteur à combustion interne, à l'intérieur d'une plage de travail définie, un réglage individuel d'au moins une grandeur fonctionnelle influençant la combustion, et **en ce qu'**un signal d'erreur est généré lorsqu'au moins un réglage individuel aux cylindres atteint une limite de la plage de travail définie.

4. Procédé selon la revendication 1 ou 2, **caractérisé en ce qu'**après une première variation de la caractéristique du réglage, on effectue en réponse à un nouveau signal d'erreur au moins une autre fois une variation de la caractéristique de réglage, en particulier par une nouvelle reprise de l'amplification du circuit de réglage.

5. Procédé selon l'une quelconque des revendications précédentes, **caractérisé en ce que** l'on effectue en réponse à un signal d'erreur, de préférence après au moins une fois une variation de la caractéristique de réglage, l'arrêt du réglage par le contrôle de l'action, une réinitialisation de la caractéristique de réglage au comportement de travail défini initialement étant notamment effectuée, ou **en ce qu'**en réponse à un signal d'erreur, de préférence après au moins une première variation de la caractéristique de réglage, il se produit un arrêt du réglage par le contrôle de l'action tout en conservant la caractéristique de réglage actuelle.

6. Procédé selon l'une quelconque des revendications précédentes, **caractérisé en ce qu'**en réponse à un signal d'erreur, de préférence après au moins une première variation de la caractéristique de réglage, un signal d'alarme externe est émis, notamment pour activer un affichage d'avertissement de préférence optique perceptible directement par l'opérateur, et/ou pour produire une entrée dans une mémoire d'un système de diagnostique pouvant être consulté de l'extérieur.
